# EUROPÄISCHE PATENTSCHRIFT

(11) **EP 1 858 682 B1**
(45) Veröffentlichungstag und Bekanntmachung des Hinweises auf die Patenterteilung: **13.11.2013**
(21) Anmeldenummer: 06704128.5
(22) Anmeldetag: 01.02.2006
(51) Int. Cl.: B29C 33/20, B29C 49/56, B22D 17/26, B29C 33/24

(54) **ANORDNUNG ZUR AUFNAHME EINER BLASFORM**
ARRANGEMENT FOR RECEIVING A BLOW MOLD
DISPOSITIF POUR RECEVOIR UN MOULE DE SOUFFLAGE

(30) Priorität: 07.03.2005 DE 102005010396
(43) Veröffentlichungstag der Anmeldung: 28.11.2007
(73) Patentinhaber: Richter, Günter, 57610 Altenkirchen (DE)
(72) Erfinder: Richter, Günter, 57610 Altenkirchen (DE)
(74) Vertreter: Schaumburg, Thoenes, Thurn, Landskron, Eckert
(86) Internationale Anmeldenummer: PCT/EP2006/050578
(87) Internationale Veröffentlichungsnummer: WO 2006/094861

(56) Entgegenhaltungen:
- DE-A1- 2 100 868
- DE-A1- 19 710 412
- US-A- 5 417 913

## Beschreibung

Die Erfindung betrifft eine Anordnung zur Aufnahme einer Blasform mit mindestens zwei auf einem Grundrahmen angeordneten Formaufspannplatten.

Bekannte Hohlkörperblasanlagen enthalten Schließanordnungen zum Schließen einer zumindest zweiteiligen Blasform, die zwei oder vier Holme enthalten, um die auf einem Grundrahmen angeordneten Maschinenplatten und Formaufspannplatten zu fixieren und insbesondere die zwischen den Formaufspannplatten beim Blasformverfahren auftretenden Kräfte aufzunehmen. Solche Schließanordnungen haben ferner zwei oder vier Führungsrohre sowie mindestens zwei Schließ- und Fahrzylinder zum Verschieben der Formaufspannplatten aus einer Position, in der die auf den Formaufspannplatten aufgespannten Teile der Blasform getrennt angeordnet sind, in eine Position, in der diese Teile aneinander stoßen und eine geschlossen Blasform bilden. Ferner sind Schließanordnungen für Hohlkörperblasanlagen bekannt, die einen Grundrahmen sowie eine Maschinenplatte oder eine Quertraverse enthalten. Ferner enthalten diese Anordnungen zwei Formaufspannplatten sowie zwei oder vier Führungsholme zum Führen der Verschiebebewegung der Formaufspannplatten und einen Schließzylinder zum Ausführen der Verschiebebewegung der Formaufspannplatten.

Weiterhin sind so genannte holmlose Schließanordnungen bekannt, die einen Grundrahmen haben, auf dem zwei Formaufspannplatten angeordnet sind, wobei mindestens ein Fahrzylinder vorgesehen ist, der über eine Ausgleichsmechanik eine gleichmäßige Verschiebebewegung der Formaufspannplatten bewirkt. Ferner ist ein Verriegelungssystem vorgesehen, um die Formaufspannplatten in einer geeigneten Position zumindest während des Blasvorgangs zu fixieren. Solche Verriegelungssysteme werden auch als holmlose Schließanlagen oder holmlose Schließeinheiten bezeichnet. Bei diesen holmlosen Schließeinheiten ist es vorteilhaft, dass eine größere Bewegungsfreiheit bei der Entnahme des gegossenen Formteils aus der Form sowie eine größere Bewegungsfreiheit bei der Gestaltung der Formteile selbst vorhanden ist. Bei Schließanlagen mit zwei oder vier Holmen ist die Formgröße durch die Holme stark eingeschränkt. Auch eine Entnahme des gegossenen Formteils wird durch die Holme behindert.

Bei bekannten holmlosen Schließeinheiten halten die Verriegelungselemente des Verriegelungssystems jedoch oft den starken Beanspruchungen während des Blasvorgangs nicht stand, wobei auch die Handhabung der Verriegelungselemente relativ aufwendig und kompliziert ist. Ferner haben diese Verriegelungselemente bei bekannten holmlosen Schließanlagen die Bewegungsfreiheit bei Entnahme eines gegossenen Formteils nicht so stark eingeschränkt, wie die Holme bei anderen bekannten Schließanlagen, jedoch sind die Verriegelungselemente beim Formenwechsel hinderlich, da sie aus den Formaufspannplatten hervorstehen und so die Bewegungsfreiheit beim Formenwechsel einschränken. Ferner können die Verriegelungselemente beispielsweise beim unachtsamen Hantieren mit Formteilen oder auch beim unachtsamen Hantieren vor oder nach dem Blasvorgang leicht beschädigt werden. Durch die bereits beschriebene Ausgleichsmechanik zum gleichmäßigen Verschieben der Formaufspannplatten ist nur eine synchrone Schließbewegung der Formteile möglich.

DE 21 00 868 A1 betrifft einen Schließmechanismus für Großblasmaschinen zur Herstellung von Hohlkörpern aus thermoplastischem Kunststoff gemäß dem Oberbegriff des Anspruchs 1. In geschlossenem Zustand werden Formaufspannplatten über Zuganker in einer Verriegelungsstellung gehalten.

Aus DE 197 10 412 A1 ist eine Spritzgussmaschine bekannt, bei der eine Spritzgussöffnung in das ortsfest angeordnete Formaufspannelement integriert ist. Das andere Formaufspannelement ist verschiebbar angeordnet. Beide Formaufspannelemente sind über vier Verriegelungselemente miteinander verbunden, die im geschlossenen Zustand die beiden Formaufspannelemente miteinander verriegeln. Alle vier Verriegelungselemente sind auf demselben Formaufspannelement angeordnet und können im offenen Zustand aus einem Zugreifraum der Spritzgußform herausbewegt werden.

US-A-5,417,913 betrifft eine Spritzgusseinrichtung und ein Spritzgießverfahren für große Spritzgießteile. Ein bewegliches Formaufspannelement wird in Richtung eines festen Formaufspannelementes bewegt. Verriegelungsstangen sind als Gewindestangen ausgebildet und greifen in beide Formaufspannelemente ein, wobei sie durch einen Elektromotor angetrieben werden. Nach dem Spritzgießvorgang werden die Verriegelungsstangen wieder gelöst und das bewegliche Formaufspannelement wird zurückbewegt.

Aufgabe der Erfindung ist es, eine Anordnung zur Aufnahme einer Blasform in einer Hohlkörperblasanlage zum Herstellen blasgeformter Elemente anzugeben, bei der eine einfache Handhabung beim Formwechsel ermöglicht und eine Verwindung der Formaufspannelemente vermieden wird.

Diese Aufgabe wird durch eine Anordnung zur Aufnahme einer Blasform mit den Merkmalen des Anspruchs 1 gelöst. Vorteilhafte Weiterbildungen der Erfindung sind in den unabhängigen Ansprüchen angegeben.

Durch eine Anordnung zur Aufnahme einer Blasform mit den Merkmalen des Anspruchs 1 ist es einfach möglich, dass in der eingefahrenen Position des Verriegelungselementes eine uneingeschränkte Bewegungsfreiheit zwischen den Formaufspannelementen vorhanden ist, da das Verriegelungselement nicht aus der Vorderseite des Formaufspannelements hervorsteht. Ferner ist insbesondere dadurch, dass das Verriegelungselement in eine in der Vorderseite des gegenüberliegenden Formaufspannelements vorgesehene Aufnahmeöffnung ragt, eine sichere Verriegelung auf einfache Art und Weise möglich.

Gemäß der Erfindung ist die Anordnung in einer Hohlkörperblasanlage zum Herstellen blasgeformter Elemente eingesetzt. Bei einer solchen Hohlkörperblasanlage ist ein Formwechsel einfach möglich. Ferner ist das Verriegelungselement vor Beschädigungen bei der Handhabung der Hohlkörperblasanlage geschützt, da es im eingefahrenen Zustand nicht in den Bereich ragt, in dem Handlungen zum Vor- oder Nachbereiten des Blasvorgangs oder zum Formwechsel durchgeführt werden. Insbesondere beim Blasvorgang treten erhebliche Kräfte auf die Formteile der Blasform auf, die dann von den Formteilen auf die Formaufspannelemente übertragen werden. Das Verriegelungselement nimmt zumindest einen Teil dieser Kräfte auf und sorgt für eine Arretierung und Fixierung der Position der beiden Formaufspannelemente zueinander. Vorzugsweise nimmt das Verriegelungselement die gesamten beim Blasvorgang auf die Teile der Blasform wirkenden Kräfte auf. Werden mehrere Verriegelungselemente vorgesehen, verteilen sich die beim Formvorgang auf die Teile der Blasform wirkenden Kräfte vorzugsweise gleichmäßig auf die Verriegelungselemente. Durch die Verriegelungselemente wird somit ein Auseinanderdrücken der Formaufspannelemente verhindert.

Zum besseren Verständnis der vorliegenden Erfindung wird im Folgenden auf das in den Zeichnungen dargestellte bevorzugte Ausführungsbeispiel Bezug genommen, das an Hand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und den Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen ein Ausführungsbeispiel der Erfindung, nämlich:
- Figur 1: eine Seitenansicht einer Anordnung zur Aufnahme einer zweiteiligen Blasform mit voll eingefahrenem Verriegelungselement;
- Figur 2: eine Seitenansicht der Anordnung nach Figur 1 mit halb geschlossenen Verriegelungselementen;
- Figur 3: eine Seitenansicht der Anordnungen nach den Figuren 1 und 2, bei der die Verriegelungselemente in einer voll geschlossenen Position dargestellt sind; und
- Figur 4: eine Ansicht der Anordnung nach den Figuren 1 bis 3 entlang der Schnittlinie A-A.

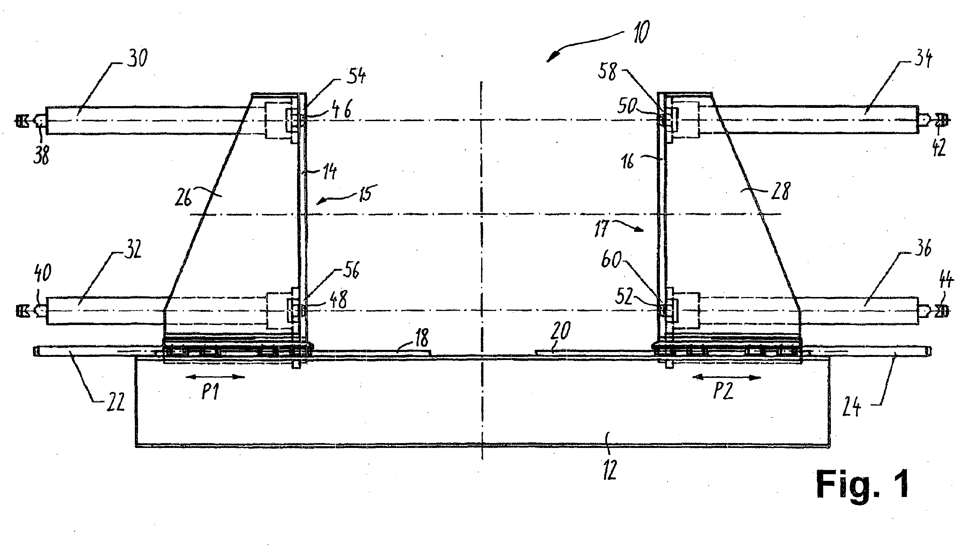

In Figur 1 ist eine Seitenansicht einer Anordnung 10 zur Aufnahme von Formteilen einer zweiteiligen Blasform dargestellt, die in einer Hohlkörperblasanlage zum Erzeugen blasgeformter Formteile aus Kunststoff genutzt wird. Diese Anordnung 10 hat keine Holme, die die Handhabung beim Öffnen und Schließen der Form zur Entnahme des blasgeformten Formteils oder beim Formwechsel behindern. Die Anordnung 10 hat einen Grundrahmen 12. Auf dem Grundrahmen 12 sind Formaufspannplatten 14, 16 angeordnet, die jeweils in zwei Führungsschienen 18, 20 eingesetzt sind. Mit Hilfe dieser Führungsschienen ist die Bewegung der Formaufspannplatten 14, 16 derart geführt, dass die im Wesentlichen parallel ausgerichteten Vorderseiten 15, 17 der Formaufspannplatten 14, 16 in Richtung der Pfeile P1 und P2 verschoben werden können, wobei die Vorderseiten 15, 17 der Formaufspannplatten 14, 16 während des Verschiebevorgangs und nach dem Verschiebevorgang etwa parallel ausgerichtet sind.

Die Formaufspannplatten 14, 16 haben Öffnungen, in die Befestigungselemente eingebracht werden können, durch die zumindest ein Formteil einer mindestens zweiteiligen Blasform mit einer der Formaufspannplatten 14, 16 verbindbar ist und so ausgerichtet werden kann, dass es geeignet positioniert ist. Die Anordnung 10 hat zwei Hydraulikzylinder 22, 24, die zum Antrieb der Formaufspannplatten 14, 16 in Richtung der Pfeile P1 und P2 dienen, um diese zu verschieben. Die Hydraulikzylinder 22, 24 sind über Leitungen mit einem Hydrauliksystem der Hohlkörperblasanlage verbunden und werden mit Hilfe einer nicht dargestellten Steuereinheit über Ventile gesteuert. Die Formaufspannplatten 14, 16 haben jeweils zwei Versteifungselemente 26, 28, die auf der Rückseite der Formaufspannplatten 14, 16 angeordnet sind und von denen jeweils ein Versteifungselement 26, 28 dargestellt ist.

An der Rückseite der Formaufspannplatten 14, 16 sind Verriegelungselemente 38, 40, 42, 44 angeordnet, die jeweils in einem Führungskolben 30, 32, 34, 36 geführt und gehalten werden. In der in Figur 1 gezeigten Darstellung sind die Verriegelungselemente 38 bis 44 in einer voll eingefahrenen Position dargestellt, in der die Vorderseiten 46 bis 52 des jeweiligen Verriegelungselements 38 bis 44 nicht auf der Oberfläche der Vorderseite 15, 17 der Formaufspannplatten 14, 16 herausragen. Die Verriegelungselemente 38 bis 44 stehen um mindestens die ausfahrbare Länge nach hinten aus den Führungskolben 30 bis 36 heraus.

Aus Platzgründen sind in Figur 1 die nach hinten aus den Führungskolben 30 bis 36 herausragenden Enden der Verriegelungselemente 38 bis 44 gebrochen und verkürzt dargestellt. Jedem der Verriegelungselemente 38 bis 44 ist gegenüberliegend in der gegenüberliegenden Formaufspannplatte 14, 16 eine zum Querschnitt des Verriegelungselements 38 bis 44 komplementär ausgebildete Aufnahmeöffnung 54 bis 60 vorgesehen, in die der vordere Teil des Verriegelungselements 38 bis 44 eingeführt werden kann und dadurch in die gegenüberliegende Formaufspannplatte 14, 16 eingreift.

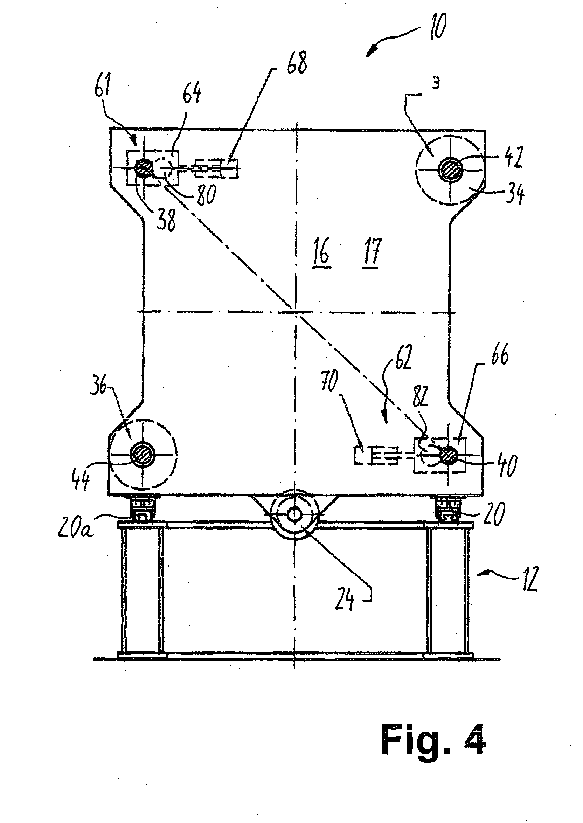

Die in die Öffnungen 54 bis 60 eingreifenden Verriegelungselemente 38 bis 44 werden dann mit Hilfe einer Verriegelungsvorrichtung verriegelt und dadurch zumindest in einer Bewegungsrichtung längs des jeweiligen Verriegelungselementes 38 bis 44 fixiert. Die Verriegelung der Verriegelungselemente 38 bis 44 wird nachfolgend im Zusammenhang mit Figur 4 noch näher erläutert. Die Verriegelungselemente 38 bis 44 werden jeweils ebenfalls mit Hilfe eines Hydraulikzylinders (nicht dargestellt) ein- und ausgefahren, d.h. verschoben.

Bei der Anordnung 10 nach Figur 1 sind insgesamt vier Verriegelungselemente 38 bis 44 vorgesehen, von denen jeweils zwei mit der Rückseite einer Formaufspannplatte 14, 16 verbunden sind. Die Formaufspannplatten 14, 16 haben eine im Wesentlichen rechteckige Vorderseite 15, 17, wobei die Verriegelungselemente 38 bis 44 jeweils diagonal gegenüberliegend an einer unteren und einer oberen Ecke angeordnet sind. In den zwei jeweils anderen diagonal gegenüberliegenden Ecken sind Aufnahmeöffnungen 54 bis 60 für die Aufnahme der Vorderseiten 46 bis 52 der jeweils gegenüberliegend angeordneten Verriegelungselemente 38 bis 44 vorgesehen. Die Formaufspannplatten 14, 16 sind weiterhin identisch aufgebaut, so dass sie gegeneinander austauschbar sind.

Die Anzahl der Verriegelungselemente 38 bis 44 ist bei anderen Ausführungsformen nicht auf vier festgelegt. Vielmehr kann die Anzahl der Verriegelungselemente 38 bis 44 abhängig von der Formgröße, den beim Blasvorgang auftretenden Kräften und der Dimensionierung der Verriegelungselemente 38 bis 44 festgelegt werden. Anstatt der Hydraulikzylinder 22, 24 können auch andere hydraulische, pneumatische und elektrische Antriebe sowohl zum Verschieben der Formaufspannplatten 14, 16 auf dem Grundrahmen 12, als auch zum Verschieben der Verriegelungselemente 38 bis 44 vorgesehen werden.

Ferner können die mit einer Formaufspannplatte 14, 16 gekoppelten Verriegelungselemente 38 bis 44 mit Hilfe eines gemeinsamen Antriebs gemeinsam in gleicher Weise verschoben werden. Auch können die Bewegungen der Formaufspannplatten 14, 16 mit Hilfe einer Ausgleichsmechanik derart gekoppelt werden, dass sie eine gleichmäßige Verschiebebewegung in Richtung der Pfeile P1 und P2 ausführen, wodurch eine synchrone Bewegung zum Öffnen und Schließen erzeugt wird. Zwei getrennt ansteuerbare Antriebe 22, 24 zum Verschieben der Formaufspannplatten 14, 16 bieten jedoch den Vorteil, dass eine asynchrone Schließbewegung der Formaufspannplatten 14, 16 möglich ist, was insbesondere bei der Herstellung komplizierter Formteil- und Artikelgeometrien vorteilhaft ist.

Jede der Formaufspannplatten 14, 16 wird somit zum Schließen der zweiteiligen Blasform in Richtung des Pfeils P1 bzw. in Richtung des Pfeils P2 zur jeweils gegenüberliegenden Formaufspannplatte 14, 16 hin verschoben, bis die Blasform geschlossen ist. Anschließend werden die Verriegelungselemente 38 bis 44 ausgefahren, bis deren Vorderseiten 46 bis 52 in die jeweils gegenüberliegende Öffnung 54 bis 60 eingreift. Weiterhin sind Verriegelungsmittel vorgesehen, die in eine Quernut 72 bis 78 des eingeführten Verriegelungselementes 38 bis 44 eingreifen und das Verriegelungselement 38 bis 44 mit der jeweiligen Formaufspannplatte 14, 16 verriegeln. Eine Bewegung der Verriegelungselemente 38 bis 44 aus dieser verriegelten Position heraus ist dann nicht mehr möglich.

Auch antriebsseitig ist die Lage der Verriegelungselemente 38 bis 44 fixiert. Dies kann beispielsweise über einen am antriebsseitigen Ende vorgesehenen Vorsprung erfolgen, der an die Stirnseite des Führungskolbens 30 bis 36 im ausgefahrenen Zustand des jeweiligen Verriegelungselementes 38 bis 44 anschlägt. Ein solcher Anschlag kann auch veränderbar ausgebildet sein, so dass der Hub der Verriegelungselemente 38 bis 44 einfach veränderbar ist und die Anordnung dadurch einfach an unterschiedliche Formgrößen anpassbar ist. Alternativ kann eine Hubbegrenzung der Verriegelungselemente 38 bis 44 mit Hilfe des einstellbaren Hubs des jeweiligen Antriebs begrenzt werden, dessen Lage über eine Verbindung zur Formaufspannplatte 14, 16 fixiert ist, so dass die Lage des Verriegelungselementes 38 bis 44 zu dieser Formaufspannplatte 14, 16 über den Antrieb fixiert ist.

Die Verriegelung der Verriegelungselemente 38 bis 44 mit jeweils beiden Formaufspannplatten 14, 16 dient dazu, die beim Blasformverfahren auf die Formaufspannplatten 14, 16 nach außen wirkenden Kräfte aufzunehmen und das Entfernen der Formaufspannplatten 14, 16 voneinander während des Blasformvorgangs zu verhindern. Dazu sind die Verriegelungselemente 38 bis 44 horizontal und vertikal versetzt zueinander um die nicht dargestellte Blasform herum angeordnet. Durch das Vorsehen mehrerer Verriegelungselemente 38 bis 44 um die Blasform herum wird ein Verwinden der Formaufspannplatten 14, 16 während des Formvorgangs wirkungsvoll verhindert.

Alternativ können antriebsseitig dieselben Verriegelungsmittel zum Verriegeln der Verriegelungselemente 38 bis 44 vorgesehen sein wie auf der gegenüberliegenden Seite.

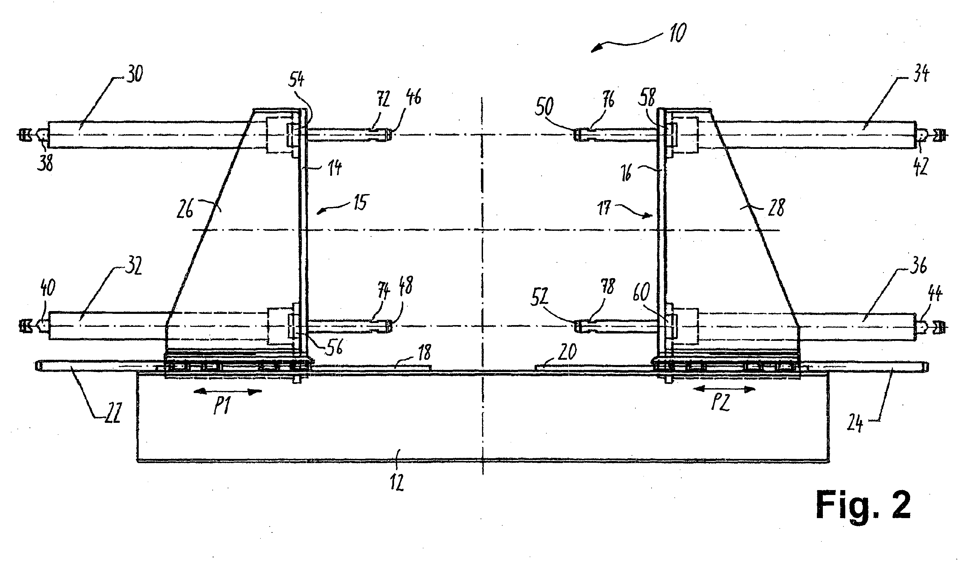

In Figur 2 ist die Anordnung 10 nach Figur 1 dargestellt. Gleiche Elemente haben gleiche Bezugszeichen. Bei der in Figur 2 gezeigten Darstellung sind die Verriegelungselemente 38 bis 44 etwa zur Hälfte ausgefahren, so dass ein Teil der Verriegelungselemente 38 bis 44 aus den Vorderseiten 15, 17 der Formaufspannplatten 14, 16 hervorsteht. Die Formaufspannplatten 14, 16 selbst sind weiterhin, wie in Figur 1 bereits gezeigt, auseinander gefahren. In dieser Position kann ein fertiges Blasformteil aus der geöffneten Form entnommen werden und ein neuer Vorformling kann in die Form eingesetzt werden. Die aus der Oberfläche der Vorderseite der Formaufspannplatten 14, 16 hervorstehenden Verriegelungselemente 38 bis 44 entsprechen in etwa der Formhöhe der Blasform, wodurch die Entnahme des fertigen Blasformteils durch die Verriegelungselemente 38 bis 44 nicht behindert wird.

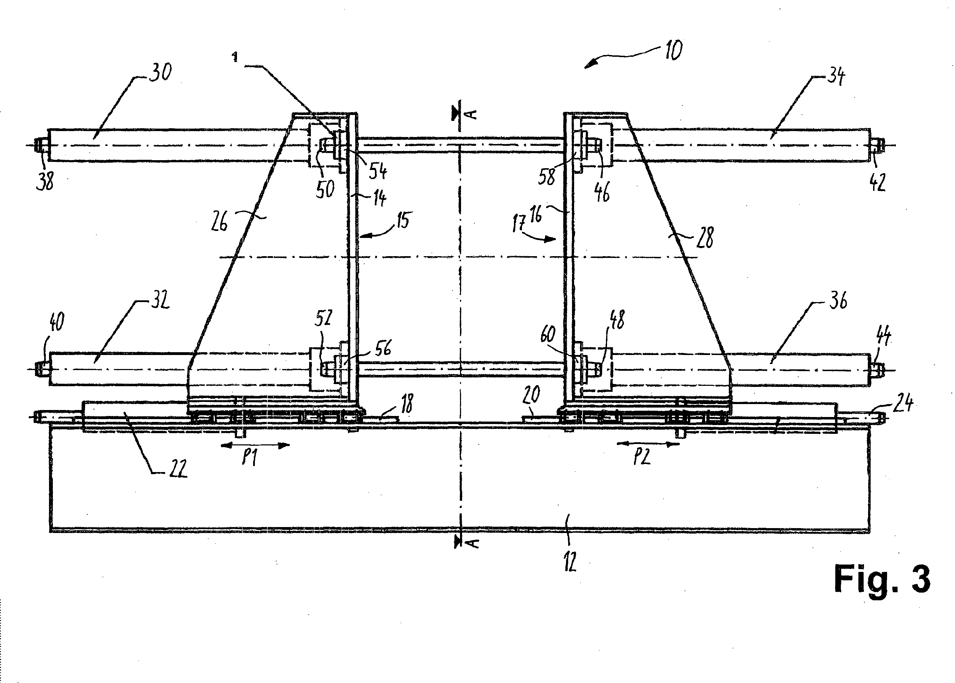

In Figur 3 ist die Anordnung 10 nach den Figuren 1 und 2 in einer geschlossenen Darstellung gezeigt, wobei die Formaufspannplatten in eine Gießposition gefahren worden sind, in der die beiden mit den Formaufspannplatten 14, 16 verbundenen Teile der Blasform derart aneinander stoßen, dass sie eine geschlossene Blasform bilden. Die Verriegelungselemente 38 bis 44 sind bei der in Figur 3 dargestellten Position so weit ausgefahren, dass sie in die in der Vorderseite 15, 17 der gegenüberliegenden Formaufspannplatte 14, 16 vorgesehene Öffnung 54 bis 60 hineinragen und dort mit Hilfe der Verriegelungsmittel verriegelt sind.

In Figur 4 ist die Darstellung der Anordnung 10 entlang der Schnittlinie A-A nach Figur 3 dargestellt. Die Verriegelungselemente 38 bis 44 ragen in die gegenüberliegenden Öffnungen 54 bis 60 und sind mit Hilfe von Verriegelungsanordnungen 61, 62 mechanisch verriegelt. Die Verriegelungsanordnungen 61, 62 enthalten jeweils eine Metallplatte 64, 66, deren Bewegung mit Hilfe mindestens einer nicht dargestellten Führungsschiene geführt ist. Ferner enthält jede der Verriegelungsanordnungen 61, 62 einen Antrieb 68, 70, der im vorliegenden Ausführungsbeispiel ein hydraulischer Antrieb ist. Mit Hilfe des Antriebs 68, 70 kann die Metallplatte 64, 66 horizontal hin und her bewegt werden. Die Metallplatte 64 hat einen relativ großen runden Öffnungsbereich 80, 82, der sich nach einer Seite hin stufenartig verjüngt.

Zum Einführen des Verriegelungselementes 38 bis 44 in die Öffnung 54 bis 60 ist die Metallplatte 64, 66 mit Hilfe des Antriebs 68, 70 derart verschoben, dass die große runde Öffnung 80, 82 mit der Öffnung 54 bis 60 in der Vorderseite der Formaufspannplatte 14, 16 übereinstimmt und das Verriegelungselement 38 bis 44 durch die Formaufspannplatte 14, 16 und durch die Metallplatte 64, 66 der Verriegelungsanordnung 61, 62 hindurchgeführt wird. Nachdem das Verriegelungselement 38 bis 44 in die Öffnung 54 bis 60 ragt und die Nut 72 bis 78 in der Öffnung 80, 82 der Metallplatte 64, 66 positioniert ist, wird der Antrieb 68, 70 derart betätigt, dass die Metallplatte 64, 66 vom Antrieb verschoben wird, wodurch das vordere Ende 46 bis 52 des jeweiligen Verriegelungselementes 38 bis 44, in dem jeweils an der Oberseite und Unterseite eine Quernut 72 bis 78 vorgesehen ist, eingreift, so dass das jeweilige Verriegelungselement 38 bis 44 zumindest nicht mehr aus der Öffnung herausgezogen werden kann. Die Verriegelungselemente 38 bis 44 sind vorzugsweise aus einem geeigneten Stahl hergestellte Rundprofile. Alternativ zur Quernut 72 bis 78 an gegenüberliegenden Seiten des Verriegelungselements 38 bis 44 kann auch eine umlaufende Quernut vorgesehen werden.

Die Erfindung ist nicht auf die in Figur 4 dargestellten Verriegelungselemente 38 bis 44 beschränkt. Vielmehr können beliebige geeignete Verriegelungsanordnungen 61, 62 zum Arretieren des Verriegelungselementes 38 bis 44 mit der jeweils gegenüberliegenden Formaufspannplatte 14, 16 vorgesehen werden, die ein Herausziehen des Verriegelungselementes 38 bis 44 aus der Öffnung 54 bis 60 verhindern. Alternativ können ähnliche Verriegelungsanordnungen 61, 62 auf der Antriebsseite des Verriegelungselementes 38 bis 44 vorgesehen werden, um auch dort ein weiteres Herausziehen der Verriegelungselemente 38 bis 44 zu verhindern. Ferner können zum Verriegeln der Verriegelungselemente 38 bis 44 alternative Verriegelungsmittel vorgesehen werden, die vorzugsweise formschlüssig in das Verriegelungselement 38 bis 44 eingreifen. Vorzugsweise wird eine Rasterverbindung zwischen den Verriegelungselementen 38 bis 44 und jeweils mindestens einer Formaufspannplatte 14, 16 erzeugt. Alternativ oder zusätzlich können auch bekannte Klemmverbindungen zum Fixieren der Verriegelungselemente 38 bis 44 vorgesehen werden.

Mit Hilfe einer in den Figuren dargestellten erfindungsgemäßen Anordnung 10 können die Verriegelungselemente 38 bis 44 zumindest soweit zurückgefahren werden, dass sie bündig mit den Vorderseiten 15, 17 der Formaufspannplatten 14, 16 sind, wodurch sie einen Formenwechsel nicht mehr behindern. Der gesamte Verriegelungsmechanismus ist hinter den Formaufspannplatten 14, 16 angeordnet, wodurch die Baugröße der Verriegelungsmechanismen 61, 62 nicht begrenzt ist. Dadurch können robuste und störunanfällige Verriegelungsmechanismen vorgesehen werden, die eine hohe Betriebssicherheit garantieren.

Obgleich in den Zeichnungen und in der vorhergehenden Beschreibung ein bevorzugtes Ausführungsbeispiel aufgezeigt und detailliert beschrieben worden ist, sollte es lediglich als rein beispielhaft und die Erfindung nicht einschränkend angesehen werden. Es wird darauf hingewiesen, dass nur das bevorzugte Ausführungsbeispiel dargestellt und beschrieben ist.

### Bezugszeichenliste

- 10: Anordnung
- 12: Grundrahmen
- 14, 16: Formaufspannplatten
- 18, 20: Führungsschiene
- 22, 24: Hydraulikzylinder
- 26, 28: Versteifungselemente
- 30 bis 34: Führungskolben
- 38 bis 44: Verriegelungselement
- 46 bis 52: Vorderseite Verriegelungselement
- 54 bis 60: Öffnung
- 61, 62: Verriegelungsanordnungen
- 64, 66: Metallplatte
- 68, 70: Antrieb
- 72 bis 78: Nut
- 80,82: Öffnung
- P1, P2: Richtungspfeile
- A-A: Schnittebene

## Patentansprüche

1. Anordnung zur Aufnahme einer Blasform in einer Hohlkörperblasanlage zum Herstellen blasgeformter Elemente,
mit mindestens zwei auf einem Grundrahmen (12) angeordneten Formaufspannelementen (14, 16), die beide auf dem Grundrahmen (12) verschiebbar angeordnet sind,
wobei die Vorderseiten (15, 17) der Formaufspannelemente (14, 16) im Wesentlichen einander zugewandt sind,
mit mindestens einem Verriegelungselement (38 bis 44), das mit Hilfe eines Verriegelungsantriebs derart verschiebbar angeordnet ist, dass es aus einer eingefahrenen Position zumindest in eine zweite ausgefahrene Position verschiebbar ist, in der das Verriegelungselement (38 bis 44) in eine in der Vorderseite (15, 17) des gegenüberliegenden Formaufspannelements (14, 16) vorgesehenen Aufnahmeöffnung (54 bis 60) ragt,
**dadurch gekennzeichnet, dass**
das jeweilige Verriegelungselement (38 bis 44) in der eingefahrenen Position nicht aus der Oberfläche der Vorderseite (15, 17) des Formaufspannelements (14, 16) hervorsteht,
als Verriegelungsantrieb ein Pneumatikzylinder und
zum Antrieb der Formaufspannelemente (14, 16) ein Hydraulikzylinder (22, 24) vorgesehen ist,
die Vorderseiten (15, 17) der Formaufspannelemente (14, 16) eine im Wesentlichen rechteckige Grundform haben,
und dass mindestens vier Verriegelungselemente (38 bis 44)vorgesehen sind, von denen jeweils zwei Verriegelungselemente (38 bis 44) in zwei im Wesentlichen diagonal gegenüberliegenden Bereichen der Vorderseite (15, 17) jedes Formaufspannelements (14, 16) vorgesehen sind.

2. Anordnung nach Anspruch 1, **dadurch gekennzeichnet, dass** Verriegelungsmittel (64, 66) vorgesehen sind, die im verriegelten Zustand formschlüssig in das Verriegelungselement (38 bis 44) eingreifen und das in die Öffnung (54 bis 60) ragende Verriegelungselement (38 bis 44) arretieren.

3. Anordnung nach Anspruch 2, **dadurch gekennzeichnet, dass** Betätigungsmittel (68, 70) zum Betätigen und/oder zum Lösen der Verriegelungsmittel (64, 66) vorgesehen sind, die einen pneumatischen, hydraulischen oder elektrischen Antrieb umfassen.

4. Anordnung nach einem der vorhergehenden Ansprüche, **dadurch gekennzeichnet, dass** eine Anordnung (30 bis 36) zum Führen und/oder Betätigen des Verriegelungselements (38 bis 44) zumindest im eingefahrenen Zustand des Verriegelungselements (38 bis 44) nicht aus der Oberfläche der Vorderseite (15, 17) des Formaufspannelements (14, 16) hervorsteht.

5. Anordnung nach einem der vorhergehenden Ansprüche, **dadurch gekennzeichnet, dass** mit den Vorderseiten der Formaufspannelemente (14, 16) je eine Teilform einer zumindest zweiteiligen Blasform verbindbar ist, wobei in den Oberflächen der Vorderseiten (15, 17) der Formaufspannelemente (14, 16) Aufnahmen für Befestigungsmittel vorgesehen sind.

6. Anordnung nach einem der vorhergehenden Ansprüche, **dadurch gekennzeichnet, dass** die Verriegelungselemente (38 bis 44), im Wesentlichen gleichmäßig um eine Formaufspannfläche der Formaufspannelemente (14, 16) herum angeordnet sind.

7. Anordnung nach einem der vorhergehenden Ansprüche, **dadurch gekennzeichnet, dass** ein Führungselement (30 bis 36) vorgesehen ist, das die Bewegung des Verriegelungselements (38 bis 44) zumindest zwischen der eingefahrenen Position und der ausgefahrenen Position führt.

8. Anordnung nach einem der vorhergehenden Ansprüche, **dadurch gekennzeichnet, dass** eine Ausgleichsmechanik zum gleichmäßigen Verschieben der Formaufspannelemente (14, 16) vorgesehen ist oder dass jeweils ein Hydraulikzylinder (22, 24) zum Verschieben eines der Formaufspannelemente (14, 16) vorgesehen ist.

9. Anordnung nach einem der vorhergehenden Ansprüche, **dadurch gekennzeichnet, dass** die Anordnung (10) zur Aufnahme einer zumindest zweiteiligen Hohlkörperblasform geeignet ist.

10. Anordnung nach einem der vorhergehenden Ansprüche, **dadurch gekennzeichnet, dass** der Grundrahmen (12) Führungsschienen (18, 20) zum Führen der Bewegungen des Formaufspannelements (14, 16) enthält.

## Claims

1. An arrangement for receiving a blow mold in a hollow body blow molding machine for producing blow molded articles,
comprising at least two mold mounting plates (14, 16) mounted on a base frame (12) that are both displaceably mounted on the base frame (12),
wherein the front faces (15, 17) of the mold mounting plates (14, 16) are arranged essentially facing each other,
comprising at least one locking element (38 to 44) that is mounted in a way that allows it to be displaced by a locking drive in such a way that it can be displaced from a retracted position at least into a second, extended position, in which the locking element (38 to 44) extends into a receiving hole (54 to 60) provided in the front face (15, 17) of the opposing mold mounting plate (14, 16),
**characterized in that**
in the retracted position the respective locking element (38 to 44) does not protrude from the surface of the front face (15, 17) of the mold mounting plate (14, 16),
a pneumatic cylinder is provided as the locking drive, and
a hydraulic cylinder (22, 24) is provided for driving the mold mounting plates (14, 16),
the mold mounting plates (14, 16) have essentially rectangular front faces (15, 17),
at least four locking elements (3 8 to 44), with two locking elements (3 8 to 44) each being provided in two essentially diagonally opposite regions of the front face (15, 17) of each mold mounting plate (14, 16).

2. An arrangement according to claim 1, **characterized in that** locking devices (64, 66) are provided which in the locked state engage the locking element (38 to 44) with positive locking and lock the locking element (38 to 44), which extends into the receiving hole (54 to 60).

3. An arrangement according to claim 2, **characterized in that** operating means (68, 70) are provided to actuate and/or disengage the locking devices (64, 66) that comprise a pneumatic, hydraulic or electric drive.

4. An arrangement according to one of the preceding claims, **characterized in that** an arrangement (30 to 36) for guiding and/or actuating the locking element (38 to 44) does not protrude from the surface of the front face (15, 17) of the mold mounting plate (14, 16), at least in the retracted state of the locking element (38 to 44).

5. An arrangement according to one of the preceding claims, **characterized in that** each mold part of a blow mold with at least two parts can be connected with the front face of one of the mold mounting plates (14, 16), wherein receiving means for fastening means are preferably provided in the surfaces of the front faces (15, 17) of the mold mounting plates (14, 16).

6. An arrangement according to one of the preceding claims, **characterized in that** the locking elements (38 to 44) are arranged more or less uniformly around a mold supporting surface of the mold mounting plates (14, 16).

7. An arrangement according to one of the preceding claims, **characterized in that** a guide element (30 to 36) is provided which guides the movement of the locking element (38 to 44) at least between the retracted position and the extended position.

8. An arrangement according to one of the preceding claims, **characterized in that** a compensating mechanism is provided for uniform displacement of the mold mounting plates (14, 16), or **in that** in each case a hydraulic cylinder (22, 24) is provided for displacement of one of the mold mounting plates (14, 16).

9. An arrangement according to one of the preceding claims, **characterized in that** the arrangement (10) is suitable for receiving a hollow body blow mold with at least two parts.

10. An arrangement according to one of the preceding claims, **characterized in that** the base frame (12) contains guide rails (18, 20) for guiding the movements of the mold mounting plate (14, 16).

## Revendications

1. Dispositif destiné à recevoir un moule de soufflage dans une installation de soufflage de corps creux destinée à fabriquer des éléments moulés par soufflage,
comprenant au moins deux éléments de serrage de moule (14, 16) disposés sur une structure de base (12), les deux étant montés mobiles sur ladite structure (12),
les faces avant (15, 17) des éléments de serrage de moule (14, 16) étant tournées sensiblement l'une vers l'autre,
comprenant au moins un élément de verrouillage (38 à 44) qui est monté de manière à pouvoir se déplacer à l'aide d'un entraînement de verrouillage, de sorte qu'il peut passer d'une position d'insertion au moins dans une seconde position de désinsertion, dans laquelle l'élément de verrouillage (38 à 44) entre dans un orifice de réception (54 à 60) ménagé dans la face avant (15, 17) de l'élément de serrage de moule (14, 16) opposé,
**caractérisé en ce que**
chaque élément de verrouillage (38 à 44) dans la position d'insertion ne dépasse pas de la surface de la face avant (15, 17) de l'élément de serrage de moule (14, 16),
un vérin pneumatique fait office de mécanisme de verrouillage et
un vérin hydraulique (22, 24) permet d'entraîner les éléments de serrage de moule (14, 16),
les faces avant (15, 17) des éléments de serrage de moule (14, 16) présentent une forme de base sensiblement rectangulaire,
et **en ce qu'**au moins quatre éléments de verrouillage (38 à 44) sont prévus, parmi lesquels respectivement deux éléments de verrouillage (38 à 44) sont agencés dans deux zones, sensiblement diagonalement opposées, de la face avant (15, 17) de chaque élément de serrage de moule (14, 16).

2. Dispositif selon la revendication 1, **caractérisé en ce que** des moyens de verrouillage (64, 66), dans l'état verrouillé, se logent par coopération de formes dans l'élément de verrouillage (38 à 44) et bloquent l'élément de verrouillage (38 à 44) s'insérant dans l'ouverture (54 à 60).

3. Dispositif selon la revendication 2, **caractérisé en ce que** des moyens d'actionnement (68, 70) permettent d'actionner et/ou de libérer les moyens de verrouillage (64, 66) et comportent un entraînement pneumatique, hydraulique ou électrique.

4. Dispositif selon l'une quelconque des revendications précédentes, **caractérisé en ce qu'**un dispositif (30 à 36) destiné à guider et/ou à actionner l'élément de verrouillage (38 à 44) au moins dans l'état d'insertion de l'élément de verrouillage (38 à 44) ne dépasse pas de la surface de la face avant (15, 17) de l'élément de serrage de moule (14, 16).

5. Dispositif selon l'une quelconque des revendications précédentes, **caractérisé en ce que** respectivement une partie d'un moule de soufflage au moins en deux parties peut être relié aux faces avant des éléments de serrage de moule (14, 16), des logements pour des moyens de fixation étant agencés dans les surfaces des faces avant (15, 17) des éléments de serrage de moule (14, 16).

6. Dispositif selon l'une quelconque des revendications précédentes, **caractérisé en ce que** les éléments de verrouillage (38 à 44) sont disposés sensiblement régulièrement autour d'une surface de serrage de moule des éléments de serrage de moule (14, 16).

7. Dispositif selon l'une quelconque des revendications précédentes, **caractérisé en ce qu'**un élément de guidage (30 à 36) guide le déplacement de l'élément de verrouillage (38 à 44) au moins entre la position d'insertion et la position de désinsertion.

8. Dispositif selon l'une quelconque des revendications précédentes, **caractérisé en ce qu'**un mécanisme d'équilibrage est destiné au déplacement régulier des éléments de serrage de moule (14, 16) ou en ce que respectivement un vérin pneumatique (22, 24) est destiné à déplacer un des éléments de serrage de moule (14, 16).

9. Dispositif selon l'une quelconque des revendications précédentes, **caractérisé en ce que** le dispositif (10) est destiné à loger un moule de soufflage de corps creux au moins en deux parties.

10. Dispositif selon l'une quelconque des revendications précédentes, **caractérisé en ce que** la structure de base (12) contient des rails de guidage (18, 20) destinés à guider les déplacements de l'élément de serrage de moule (14, 16).
